# EUROPÄISCHE PATENTSCHRIFT

(11) **EP 0 691 016 B1**
(45) Veröffentlichungstag und Bekanntmachung des Hinweises auf die Patenterteilung: **14.05.1997**
(21) Anmeldenummer: 94904973.8
(22) Anmeldetag: 27.01.1994
(51) Int. Cl.: G07F 19/00, G07D 13/00, G06K 17/00, G06K 13/16

(54) **BELEGDRUCKEINRICHTUNG SOWIE EIN VERFAHREN ZUM ERFASSEN VON BELEGEN ÜBER KONTROLLKENNZEICHEN UNTER VERWENDUNG DIESER BELEGDRUCKEINRICHTUNG**
DOCUMENT PRINTER, AND A METHOD FOR THE CAPTURE OF DOCUMENTS BY MEANS OF VERIFICATION CODE-NUMBERS USING THE DOCUMENT PRINTER
IMPRIMANTE POUR DOCUMENTS ET PROCEDE PERMETTANT LA SAISIE DE DOCUMENTS A L'AIDE DE NUMEROS DE CONTROLE ET AU MOYEN DE CETTE IMPRIMANTE

(30) Priorität: 23.03.1993 DE 4309309
(43) Veröffentlichungstag der Anmeldung: 10.01.1996
(73) Patentinhaber: Siemens Nixdorf Informationssysteme Aktiengesellschaft, 33102 Paderborn (DE)
(72) Erfinder: SCHMIDT, Peter, D-33104 Paderborn (DE); HEISE, Wolfgang, D-33104 Paderborn (DE); LAPPE, Bernhard, D-33142 Büren (DE)
(74) Vertreter: Fuchs, Franz-Josef, Dr.-Ing.
(86) Internationale Anmeldenummer: DE9400072
(87) Internationale Veröffentlichungsnummer: WO9422117

(56) Entgegenhaltungen:
- EP-A- 0 341 524
- EP-A- 0 354 260
- EP-A- 0 492 900
- DE-A- 3 514 062
- DE-C- 3 528 199

## Beschreibung

Belegdruckeinrichtungen oder Scheckdrucker zum Bedrucken von Schecks oder anderen Formularen sind in Banken oder im Einzelhandel schon seit längerem im Einsatz. Sie enthalten im allgemeinen einen Druckkopf sowie einen Transportkanal zum Transportieren der fertigen bedruckten Schecks zum Druckerausgang. Eine derartige, als Wertgeber bezeichnete Einrichtung ist aus der DE-C2-35 14 062 bekannt. Die bekannte Einrichtung enthält weiterhin eine Leseeinrichtung, die auf den Scheckformularen bereits vorhandene Codierungen und in der Druckstation aufgedruckte Zeichen liest und damit kontrolliert. Hierzu werden sicherheitsrelevante Teile der Beschriftung auf den Wertscheinen vor dem Druckvorgang und die von dem Druckkopf aufgedruckte Daten überprüft. Sollten sich beim Vergleich dieser Daten mit gespeicherten Soll-Werten Unstimmigkeiten ergeben, werden die fehlerhaft bedruckten Scheckformulare in einem Sammelfach abgelegt, um zu vermeiden, daß diese fehlerhaft bedruckten Scheckformulare dem Kunden ausgehändigt werden.

Blankoschecks werden in Druckereien erstellt und zwar als Einzelbelege oder in erfindungsgemäßer Weise als Druckbogen oder Formularrollen mit mehreren darauf angeordneten Schecks. Die Verwendung von Druckbogen oder Formularrollen hat Lager und Verwaltungsvorteile.

Da Blankoschecks leicht mißbräuchlich benutzt werden können, werden erfindungsgemäß die Blankoschecks auf den Druckbögen oder einzeln mit einer fortlaufenden Nummer in Form eines Kontrollkennzeichens versehen. Damit läßt sich der Verbleib der Schecks lückenlos kontrollieren. Das Kontrollkennzeichen ist günstigerweise auf der nicht bedruckten Rückseite des Beleges angeordnet. Das Aufbringen des Kontrollkennzeichens erfolgt dabei in der Druckerei, es kann jedoch auch gegebenenfalls in der Bank mit einer entsprechenden Druckeinrichtung aufgebracht werden. Auf jeden Fall ist es vor Ausgabe der Schecks an den Kunden notwendig, die Schecks durch Schneiden der Druckbogen zu vereinzeln, mit entsprechenden kundenspezifischen Daten zu versehen und die Kontrollkennzeichen zu erfassen. Damit eine lückenlose Kontrolle erfolgen kann, muß die Erfassung des Kennzeichens unmittelbar am Übergabeort an den Bankkunden, also an der Ausgabe erfolgen und zwar in einem Bereich, in dem sichergestellt ist, daß eine physikalische Übergabe an den Kunden auch tatsächlich erfolgt.

Aus der DE-A-35 28 199 ist ein Scheckausgabeautomat bekannt, der zwar Belege in einer Datenaufzeichnungs-/Druckeinrichtung bedruckt und zu einem Auswurfschlitz transportiert, zwischen der Datenaufzeichnungs-/Druckeinrichtung und dem Auswurfschlitz werden die Belege jedoch nicht mehr gelesen und damit nicht mehr kontrolliert.

In dem System gemäß EP-A-0 354 260 werden Rabatt-Coupons zuerst hergestellt und dann verwendet. Im Herstellungsschritt werden die Coupons einzeln mit Kontrollkennzeichen bedruckt und dann zu einem Heft gebündelt. Nur das Deckblatt des Heftes wird mit weiteren Angaben bedruckt, die dann zu Speicherzwecken auch gelesen werden. Die Kontrollkennzeichen der Coupons werden nach dem Druck und vor ihrer Ausgabe auf der Herstellungseinrichtung nicht mehr gelesen.

Sobald ein Coupon schließlich zur Einlösung verwendet wird, wird er in einem händlerseitigen Gerät gelesen und z. B. mittels Drucker entwertet. Nach diesem Entwertungsdruck findet vor der Entnahme des Coupons aus dem händlerseitigen Gerät kein Lesen mehr statt.

Ziel der Erfindung ist es deshalb, eine Belegdruckeinrichtung sowie ein Verfahren zum Betrieb einer derartigen Belegdruckeinrichtung bereitzustellen, mit der es in einfacher und kostengünstiger Weise möglich ist, Belege unmittelbar am Übergabeort an den Kunden so zu kontrollieren, daß nach der Kontrolle entweder eine physikalische Übergabe an den Kunden auch tatsächlich erfolgt oder daß die Belege definiert zurückgehalten werden.

Ein weiteres Ziel der Erfindung ist es, eine zur Kontrolle erforderliche Leseeinrichtung so auszugestalten und anzuordnen, daß es hierzu einer wesentlichen Änderung des konstruktiven Gesamtaufbaues der Belegdruckeinrichtung nicht bedarf.

Ein weiteres Ziel der Erfindung ist es, die Belegdruckeinrichtung so auszugestalten, daß sie in einfacher Weise anwendungsabhängig umgerüstet werden kann.

Diese Aufgabe wird gemäß den Merkmalen der Patentansprüche 1 und 6 gelöst.

Vorteilhafte Ausführungsformen der Erfindung sind in den Unteransprüchen gekennzeichnet.

Das Aufdrucken von Kontrollkennzeichen auf der Rückseite der Scheckformulare hat den Vorteil, daß darüber eine leichte und einfache Verwaltung und Kontrolle der Scheckformulare möglich ist. Zur Erfassung dieser Kontrollkennzeichen wird eine Leseeinrichtung verwendet, die unmittelbar vor dem Ausgang einer Entnahmestation zur Entnahme der Scheckformulare angeordnet ist. Die Leseeinrichtung nutzt in einfacher Weise die Relativbewegung des Scheckformulares zu einer ortsfesten Abtasteinrichtung zum Erfassen des Kontrollkennzeichens.

Durch die Erfindung wird gewährleistet, daß die mit kundenspezifischem Aufdruck versehenen Schecks in unmittelbarer Nahe vom Ausgang der Entnahmestation anhand ihres Kontrollkennzeichens identifiziert werden. Da kein anderer Weg mehr möglich ist, müssen sie zwangsläufig in die Hand des Kunden gekommen sein und damit aus dem Verantwortungsbereich der Bank. Andernfalls können sie nur in einem Rejektfach abgelegt sein.

Die Umrüstung bestehender Belegdruckeinrichtungen ist dann besonders einfach, wenn die Leseeinrichtung, die aus einem Scanner, einer Strichcode- oder einer Klarschriftleseeinrichtung bestehen kann, ortsfest im Transportkanal der Druckeinrichtung angeordnet wird. Die für den Transport der Belege durch die Druckeinrichtung sowieso erforderliche Transporteinrichtung z.B. in Form von bewegten Andruckrollen oder in Form einer Wende- oder Stapeleinrichtung oder einer Sammelstation, wie sie in der DE-Patentanmeldung P 42 25 418.3 näher beschrieben ist, sorgt für die zum Abtasten erforderliche Relativbewegung zwischen Papier und Abtaster. Günstig ist es, den Abtaster oder die Leseeinrichtung ausgangsseitig an der Druckeinrichtung anzuordnen, d.h. in einem Bereich, in dem die Bewegungsgeschwindigkeit der Belege am größten ist, da der Abtastvorgang als solcher im allgemeinen eine Mindestrelativgeschwindigkeit erfordert. Die Leseeinrichtung ist ortsfest installiert und zwar auswechselbar in einer entsprechenden Haltevorrichtung, so daß ohne Änderung der Aggregate der Druckeinrichtung anwendungsabhängig eine Anpassung der Druckeinrichtung möglich ist.

Eine deartige Belegdruckeinrichtung ist vielseitig einsetzbar, sie kann entweder allein als Lese- oder Druckeinrichtung dienen oder als kombiniertes Gerät, das z.B. in einem Automaten installiert ist. In diesem Fall besteht die Möglichkeit, daß ein Kunde durch Eingabe einer PIN-Nummer eine entsprechende Anzahl von Schecks anfordert. In Abhängigkeit von seinem Eingangssignal wird dann der Belegdruckeinrichtung ein Druckbogen zugeführt, die Schecks vereinzelt und auf jeden Scheck persönliche Daten aufgedruckt. Danach werden die Schecks Blatt für Blatt über eine einer Trommel zugeordnete Greifeinrichtung ergriffen, an einer OCR-Leseeinrichtung vorbeigeführt und so das Kontrollkennzeichen auf der Rückseite der Schecks über eine OCR-Leseeinrichtung erfaßt und in der Klemmeinrichtung gesammelt und dann durch Drehrichtungsumkehr der Trommel über einen Ausgabeschlitz ausgegeben. Damit wird der Organisationsablauf zur Erstellung, Erfassung und Ausgabe der Schecks wesentlich erleichtert. Auch bereits bestehende Automaten mit integrierter Belegdruckeinrichtung können in einfacher Weise dem gewünschten Verfahrensablauf angepaßt werden.

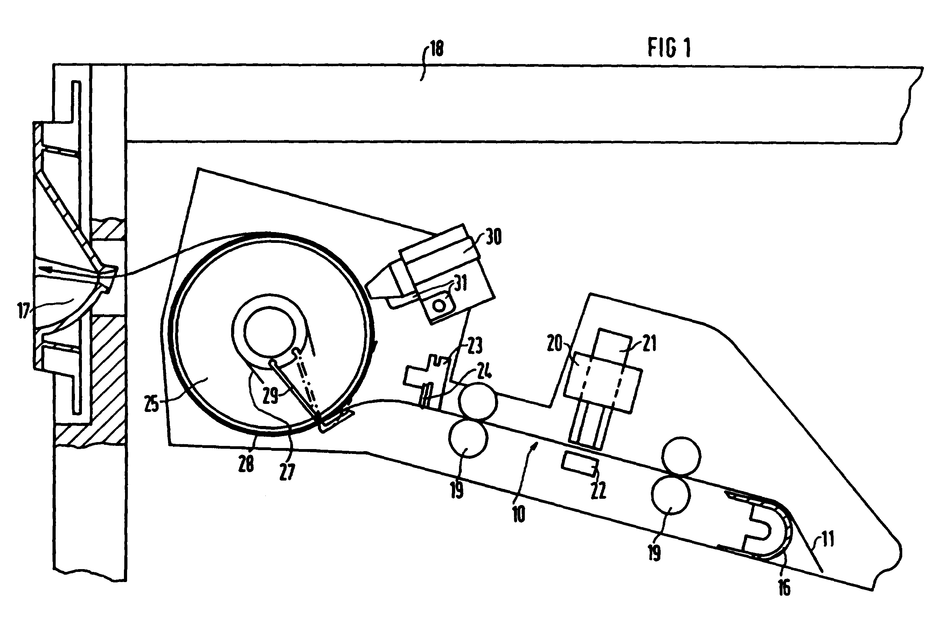

Eine Ausführungsform der Erfindung ist in den Zeichnungen dargestellt und wird im folgenden beispielsweise näher beschrieben. Es zeigen
Figur 1 eine schematische Schnittdarstellung einer Belegdruckeinrichtung mit integrierter Leseeinrichtung und
Figur 2 eine schematische Darstellung eines Druckbogens mit darauf angeordneten Scheckformularen mit zugeordnetem Kontrollkennzeichen auf der Rückseite.

Eine hier nicht im einzelnen dargestellte Beleg- oder Scheckdruckeinrichtung enthält einen Transportkanal 10 zum Transport von auf Druckbogen 11 angeordneten Scheckformularen 12 durch die Belegdruckeinrichtung. Die Druckbogen 11 können dabei als Rollen konfektioniert sein mit den darauf aufgedruckten Schecks 12, die über eine Perforationskante 13 mit einem zugehörigen Quittungsbeleg 14 zusammenhängen. Auf der Rückseite des Druckbogens 11, den Schecks 12 zugeordnet ist ein Kontrollkennzeichen 15 in Form einer fortlaufenden Nummer in OCR-Darstellung aufgedruckt.

Der Transportkanal 10 erstreckt sich von einem Eingangsbereich 16 der Druckeinrichtung zur Eingabe der Druckbogen 11 bis zu einem Ausgabeschlitz 17 zur Ausgabe der fertig konfektionierten Schecks, wobei die gesamte Belegdruckeinrichtung tresorgeschützt in einem Scheckausgabeautomaten 18 angeordnet ist. Entlang des Transportkanales 10 sind die für die Belegverarbeitung erforderlichen Aggregate angeordnet. Diese bestehen im wesentlichen aus zwei Paar elektromotorisch angetriebenen Antriebsrollen 19 mit zwischen den Antriebsrollen 19 angeordnetem Druckkopf 20 zum Bedrucken der Belege 11. Der Druckkopf kann aus einem üblichen Nadeldruckkopf mit zugeordneter Farbbandkassette 21 bestehen oder aus einem Tintendruckkopf, der beim Drucken senkrecht zur Belegtransportrichtung bewegt wird, wobei ein Druckbalken 22 als Auflagefläche für die Belege bzw. als Wiederlager für den Druckkopf 20 dient.

Im Transportkanal 10, den Antriebsrollen 19 in Transportrichtung nachgeordnet, befindet sich eine Schneideeinrichtung 23 mit einem Messer 24, z.B. in Form einer Schneiderolle, die dazu dient, die Schecks 12 gegebenenfalls mit anhängendem Quittungsbeleg 14 aus dem Formular 11 zu schneiden und so zu vereinzeln.

In Fortsetzung des Transportkanales 10 nach der Schneideeinrichtung 23 ist eine als Sammelstation dienende Wendeeinrichtung mit zugehöriger Bündeleinrichtung angeordnet. Diese in der DE-Patentanmeldung P 42 25 418.3 näher beschriebene Sammelstation 25 besteht aus einer elektromotorisch über einen Riemen 27 antreibbare Trommel 28, die die einzelnen Schecks 12 mit einer Zange 29 transportiert. Ist die entsprechende Anzahl von Schecks in der Zange 29 abgelegt, erfolgt eine Drehrichtungsumkehr der Trommel und das Scheckbündel wird über den Ausgabeschlitz 17 ausgegeben. Hierzu ist die Trommel in unmittelbarer Nähe des Ausgabeschlitzes 17 angeordnet und bildet mit diesem eine Entnahmestation. Werden die Schecks nicht über den Ausgabeschlitz entnommen, verbleiben sie in der Zange 29 und damit in Eingriff mit der Trommel. Sie werden danach in einem hier nicht dargestellten, in der in der DE-Patentanmeldung P 42 25 418.3 jedoch näher beschriebenen Rejektfach abgelegt.

Im Transportkanal im Bereich der Trommel 28 ist eine OCR-Leseeinrichtung 30 angeordnet, die das auf der Rückseite der Schecks 12 befindliche Kontrollkennzeichen 15 abtastet und zwar dadurch, daß Blatt für Blatt von der Zange 29 ergriffen wird. Dazu macht die Trommel 28 jeweils eine Umdrehung, bei der das Kennzeichen des zuoberst liegenden Schecks gelesen wird. Durch die Art der Sammlung der Schecks in der Zange 29 erfolgt eine Umkehr der Reihenfolge der Ablage der Schecks in der Zange 29 bezogen auf die Zufuhrreihenfolge über die Transporteinrichtung 19. Nach dem letzten Scheck wird die Drehrichtung der Trommel umgekehrt und das Scheckpaket aus dem Ausgabeschlitz 17 ausgeschoben. Der Kunde erhält dadurch ein Bündel von Schecks, die in aufsteigender Reihenfolge z.B. mit einer laufenden Nr. 1-10 versehen sind. Die Relativbewegungsgeschwindigkeit zwischen Scheck und ortsfester Leseeinrichtung ist infolge des großen Durchmessers der Trommel 28 relativ groß. Sie entspricht der Transportgeschwindigkeit im Transportkanal im Bereich der Transportrollen 19. Dies unterstützt den Lesevorgang. Die Leseeinrichtung 30 ist auswechselbar in einer Halterung 31 befestigt.

Die gesamte Anordnung arbeitet wie folgt:

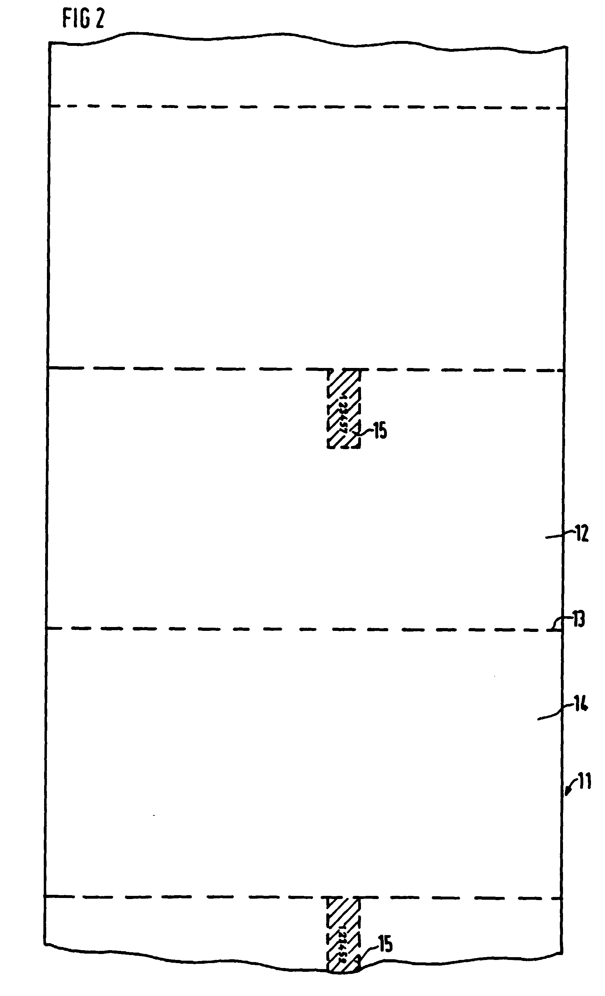

In einer auf das Drucken von Scheckformularen spezialisierten Druckerei werden die in der Figur 2 dargestellten Blankoscheckformulare auf Endlospapier 11, z.B. Faltpapier mit Perforation oder Rollenpapier gedruckt und auf ihrer Rückseite mit dem Kontrollkennzeichen 15 versehen. Danach wird die Scheckrolle zur Bank geliefert und dort in die entsprechende Aufnahmevorrichtung der Belegdruckeinrichtung des Scheckausgabeautomaten eingelegt und über eine Eingabeprozedur die Vorderkante des ersten Schecks im Bereich des Druckkopfes 20 in eine vorgebbare Transportlage positioniert. Die Transportlage ist bestimmt durch die Position von seitlichen Anschlägen des Transportkanales 10 und durch eine über eine Lichtschranke abgetastete Positionslage im Bereich des Druckkopfes 20. Wird von einem Kunden über ein Tastaturfeld des Scheckausgabeautomaten 18 nach Eingabe einer entsprechenden PIN-Nummer ein Schecksatz angefordert, werden die einzelnen Schecks 12 über den Druckkopf 20 mit entsprechenden personenbezogenen Daten, z.B. Kontonummer etc. bedruckt, über die Schneideeinrichtung 23 vereinzelt und in der Zange 29 abgelegt. Während der Transportbewegung über die Trommel 28 erfolgt eine Abtastung des Kontrollkennzeichens 15 auf der Rückseite der Schecks. Nach Bündelung der Schecks und Registrierung erfolgt eine entsprechende Ausgabe über den Ausgabeschlitz 17.

Bei dem dargestellten Ausführungsbeispiel werden die Scheckformulare bereits in der Druckerei mit Kontrollkennzeichen versehen. Es ist jedoch bedarfsweise möglich, die Kontrollkennzeichen erst beim Durchlauf durch die Belegdruckeinrichtung zu erstellen. Dies kann z.B. mit einer separaten getrennten Belegdruckeinrichtung erfolgen.

Das Kontrollkennzeichen besteht beim Ausführungsbeispiel aus einer fortlaufenden Nummer in OCR-Darstellung. Anstelle der OCR-Darstellung ist auch eine Darstellung in Strichcode möglich mit einer entsprechenden Anpassung der Leseeinrichtung. Ebenso ist es denkbar, die Leseeinrichtung als Scanner auszubilden, der sich auch über die gesamte Breite des Transportkanals erstrecken kann. Ähnliches gilt auch für Leseeinrichtungen, die als OCR-Leseeinrichtungen oder als Strichcodeleseeinrichtungen ausgebildet sind, wenn z.B. mit Hilfe dieser Leseeinrichtungen mehrere, beispielsweise nebeneinander angeordnete Kontrollkennzeichen gelesen werden sollen.

Werden wie bei dem dargestellten Ausführungsbeispiel als Kontrollkennzeichen fortlaufende Nummern im OCR-Format verwendet, ist es sinnvoll und günstig, diese so auf der Rückseite aufzudrucken, daß sie sich in Transportrichtung erstrecken. Damit können sie in einfacher Weise an der OCR-Leseeinrichtung 30 vorbeigeführt werden, wobei sich die Position dieser OCR-Leseeinrichtung 30 an der aufgedruckten Spurlage des Kontrollkennzeichens orientieren kann oder aber beim Aufdruck des Kontrollkennzeichens auf dem Scheck wird die vorgegebene Transportlage in der Druckeinrichtung berücksichtigt.

### Bezugszeichenliste

- 10: Transportkanal
- 11: Endlospapier, Formular, Beleg, Druckbogen
- 12: Scheck
- 13: Perforationskante
- 14: Quittungsbeleg, Quittungsdruck
- 15: Kontrollkennzeichen, laufende Nummer
- 16: Eingangsbereich
- 17: Ausgabeschlitz
- 18: Scheckausgabeautomat
- 19: Antriebsrollen
- 20: Druckkopf
- 21: Farbbandkassette
- 22: Druckbalken
- 23: Schneideeinrichtung
- 24: Messer
- 25: Wendeeinrichtung, Sammelstation
- 27: Riemen
- 28: Trommel
- 29: Zange, Sammelvorrichtung
- 30: Leseeinrichtung, Abtaster
- 31: Halterung

## Patentansprüche

1. Verfahren zum Erfassen von Belegen (11) über Kontrollkennzeichen (15) unter Verwendung einer Belegdruckeinrichtung mit einem Druckaggregat (20) und einem Transportkanal (10) mit zugeordneter Transporteinrichtung (19, 28), die die Belege (11) in einer vorgebbaren Transportlage durch die Belegdruckeinrichtung zu einem Ausgang (17) einer Entnahmestation transportiert mit folgenden Merkmalen:
a)Aufdrucken von einer Folge von Kontrollkennzeichen (15) auf eine Folge von Belegen unter Berücksichtigung der vorgebbaren Transportlage über eine Druckeinrichtung,
b)Eingeben der Belege in die Belegdruckeinrichtung,
c)Identifikation der Kontrollkennzeichen (15) auf den Belegen (11) unmittelbar vor dem Ausgang (17) der Entnahmestation (17) in einem Bereich in dem die Ausgabe der Belege physikalisch eindeutig sichergestellt ist über eine Leseeinrichtung (30), wobei die für den Lesevorgang benötigte Relativbewegung von Leseeinrichtung (30) und Belege (11) durch den Transport der Belege (11) in der Belegdruckeinrichtung erzeugt wird.

2. Verfahren nach Anspruch 1, wobei das oder die Kontrollkennzeichen (15) über eine ortsfest in dem Transportkanal (10) der Belegdruckeinrichtung angeordnete Leseeinrichtung (30) abgetastet wird.

3. Verfahren nach einem der Ansprüche 1 oder 2, wobei das oder die Kontrollkennzeichen (15) in Transportrichtung der Belege (11) erstreckend aufgedruckt werden.

4. Verfahren nach einem der Ansprüche 1 bis 3, wobei das oder die Kontrollkennzeichen (15) auf der Rückseite der als Scheckformulare (12) ausgebildeten Belege (11) aufgedruckt werden.

5. Verfahren nach einem der Ansprüche 1 bis 4, wobei das oder die Kontrollkennzeichen (15) über eine externe Druckeinrichtung auf Belege (11) gedruckt werden, die auf Druckbogen oder Formularrollen angeordnet sind, wobei eine Vereinzelung der Belege (11) innerhalb der Belegdruckeinrichtung erfolgt.

6. Belegdruckeinrichtung mit
- einem Druckaggregat (20),
- einem Transportkanal (10) mit zugeordneter Transporteinrichtung (19, 28), die geeignet ist einen Beleg (11) bis zu einem Ausgang (17) einer Entnahmestation der Belegdruckeinrichtung zu transportieren,
- einer im Transportkanal (10) in unmittelbarer Nähe zum Ausgang (17) in einem Bereich der Entnahmestation in dem die Ausgabe der Belege physikalisch eindeutig sichergestellt ist angeordnete Leseeinrichtung (30), die den von der Transporteinrichtung (19, 28) relativ zur Leseeinrichtung (30) bewegten Beleg (11) während des Transports im Transportkanal (10) abtastet, derart, daß die Leseeinrichtung (30) ein auf dem Beleg bedarfsweise angeordnetes Kennzeichen (15) identifiziert.

7. Belegdruckeinrichtung nach Anspruch 6 mit einer ortsfest im Transportkanal (10) angeordneten Leseeinrichtung (30).

8. Belegdruckeinrichtung nach einem der Ansprüche 6 oder 7 mit einer Leseeinrichtung (30), die als Klarschriftleseeinrichtung ausgebildet ist.

9. Belegdruckeinrichtung nach nach einem der Ansprüche 6 oder 7 mit einer Leseeinrichtung (30), die als Strichcode-Leseeinrichtung oder als Scanner ausgebildet ist.

10. Belegdruckeinrichtung nach einem der Ansprüche 6 bis 9 mit einer dem Transportkanal (10) zugeordneten Schneideeinrichtung (23) zum Vereinzeln mehrerer zusammenhängender Belege (11).

11. Belegdruckeinrichtung nach einem der Ansprüche 6 bis 10 mit einer als Sammelstation (25) ausgebildeten Transporteinrichtung.

12. Belegdruckeinrichtung nach einem der Ansprüche 6 bis 11 mit einer dem Transportkanal (10) zugeordneten, die Leseeinrichtung bedarfsweise aufnehmenden Halteeinrichtung (31).

## Claims

1. Process for registering documents (11) by means of control markings (15) using a document printer having a print unit (20) and a transport duct (10) with an associated transport device (19, 28) which transports the documents (11) in a predefinable transport position through the document printer to an outlet (17) of a removal bay, having the following features:
a) imprinting of a succession of control markings (15) on a succession of documents, consideration being given to the predefinable transport position via a printer,
b) feeding of the documents into the document printer,
c) identification of the control markings (15) on the documents (11) directly before the outlet (17) of the removal bay (17), in a region in which the delivery of the documents is physically clearly ensured, by means of a reading device (30), the relative motion of reading device (30) and documents (11), which relative motion is required for the reading operation, being generated by the transportation of the documents (11) in the document printer.

2. Process according to Claim 1, the control marking or markings (15) being scanned by means of a reading device (30) disposed immovably in the transport duct (10) of the document printer.

3. Process according to on3 of Claims 1 or 2, the control marking or markings (15) being imprinted in a manner extending in the transport direction of the documents (11).

4. Process according to one of Claims 1 to 3, the control marking or markings (15) being imprinted on the reverse of the documents (11) configured as cheque forms (12).

5. Process according to one of Claims 1 to 4, the control marking or markings (15) being printed by means of an external printer onto documents (11) which are arranged on printed sheets or form rolls, a separation of the documents (11) being carried out within the document printer.

6. Document printer having
- a print unit (20),
- a transport duct (10) with associated transport device (19, 28), which is suitable for transporting a document (11) up to an outlet (17) of a removal bay of the document printer,
- a reading device (30) disposed in the transport duct (10) in the direct vicinity of the outlet (17) in a region of the removal bay in which the delivery of the documents is physically clearly ensured, which reading device scans the document (11) during transportation in the transport duct (10), the document being moved by the transport device (19, 28) relative to the reading device (30), such that the reading device (30) identifies a marking (15) disposed, where necessary, on the document.

7. Document printer according to Claim 6, having a reading device (30) disposed immovably in the transport duct (10).

8. Document printer according to one of Claims 6 or 7, having a reading device (30) which is configured as an optical character reading device.

9. Document printer according to one of Claims 6 or 7, having a reading device (30) which is configured as a bar-code reading device or as a scanner.

10. Document printer according to one of Claims 6 to 9, having a cutting device (23), assigned to the transport duct (10), for separating a plurality of connected documents (11).

11. Document printer according to one of Claims 6 to 10, having a transport device configured as a collecting bay (25).

12. Document printer according to one of Claims 6 to 11, having a holding device (31) which is assigned to the transport duct (10) and, where necessary, receives the reading device.

## Revendications

1. Procédé de détection de documents (11) au moyen de signes de contrôle (15), en utilisant un dispositif d'impression comportant un groupe d'impression (20) et un canal de transport (10) ayant un dispositif de transport (19, 28) associé, qui achemine les documents (11) dans le dispositif d'impression de documents en une position de transport pouvant être prédéterminée vers une sortie (17) d'un poste de prélèvement, présentant les particularités suivantes :
a) impression au moyen d'un dispositif d'impression d'une série de signes de contrôle (15) sur une série de documents en tenant compte de la position de transport pouvant être prédéterminée ;
b) insertion des documents dans le dispositif d'impression de documents ;
c) identification des signes de contrôle (15) apposés sur les documents (11) au moyen d'un dispositif de lecture (30) directement avant la sortie (17) du poste de prélèvement (17), dans une zone dans laquelle la remise physique des documents est assurée sans équivoque, le mouvement relatif du dispositif de lecture (30) et des documents (11) nécessaire au processus de lecture étant engendré par l'acheminement des documents (11) dans le dispositif d'impression de documents.

2. Procédé suivant la revendication 1, selon lequel le ou les signes de contrôle (15) sont détectés au moyen d'un dispositif de lecture (30) qui est disposé à demeure dans le canal de transport (10).

3. Procédé suivant l'une des revendications 1 ou 2, selon lequel le ou les signes de contrôle (15) sont imprimés en s'étendant positionnés dans le sens du transport des documents (11).

4. Procédé suivant l'une des revendications 1 à 3, selon lequel le ou les signes de contrôle (15) sont imprimés au verso des documents (11) réalisés sous la forme de formulaires (12) de chèques.

5. Procédé suivant l'une des revendications 1 à 4, selon lequel le ou les signes de contrôle (15) sont imprimés sur des documents (11), qui sont disposés sur des formulaires d'impression ou des rouleaux de formulaires, au moyen d'un dispositif d'impression externe de documents, une individualisation des documents (11) étant effectuée dans le dispositif d'impression de documents.

6. Dispositif d'impression de documents, comportant
- un groupe d'impression (20) ;
- un canal de transport (10) ayant un dispositif de transport (19, 28) associé, qui est approprié pour acheminer un document (11) jusqu'à une sortie (17) d'un poste de prélèvement du dispositif d'impression de documents ;
- un dispositif de lecture (30) qui est disposé dans un canal de transport (10) à proximité immédiate de la sortie (17), dans une zone du poste de prélèvement dans laquelle la remise physique des documents est assurée sans équivoque, et qui, pendant l'acheminement dans le canal de transport (10), détecte le document (11) déplacé par le dispositif de transport (19, 28) par rapport au dispositif de lecture (30), de telle sorte que le dispositif de lecture (30) identifie un signe de contrôle (15) apposé sur le document en fonction des besoins.

7. Dispositif d'impression de documents suivant la revendication 6, comportant un dispositif de lecture (30) disposé à demeure dans le canal de transport (10).

8. Dispositif d'impression de documents suivant l'une des revendications 6 ou 7, comportant un dispositif de lecture (30) qui est réalisé sous la forme d'un dispositif de lecture de caractères en clair.

9. Dispositif d'impression de documents suivant l'une des revendications 6 ou 7, comportant un dispositif de lecture (30) qui est réalisé sous la forme d'un dispositif de lecture de code-barre ou d'un scanner.

10. Dispositif d'impression de documents suivant l'une quelconque des revendications 6 à 9, comportant, associé au canal de transport (10), un dispositif de découpe (23) qui est destiné à l'individualisation de plusieurs documents (11) attachés ensemble.

11. Dispositif d'impression de documents suivant l'une quelconque des revendications 6 à 10, comportant un dispositif de transport qui est réalisé sous la forme d'un poste collecteur (25).

12. Dispositif d'impression de documents suivant l'une quelconque des revendications 6 à 11, comportant, associé au canal de transport (10), un dispositif de fixation (31) qui reçoit le dispositif de lecture en cas de besoin.
